# FASCICULE DE BREVET EUROPEEN

(11) **EP 2 228 804 B1**
(45) Date de publication et mention de la délivrance du brevet: **16.05.2012**
(21) Numéro de dépôt: 10155229.7
(22) Date de dépôt: 02.03.2010
(51) Int. Cl.: H01B 3/14

(54) **Procédé de fabrication d'un isolateur haute tension en verre ou en porcelaine par scellement des pièces métalliques dudit isolateur par un mortier de scellement**
Verfahren zur Herstellung eines elektrischen Hochspannungsisolators aus Glas oder Keramik, bei Abdichtung des metallischen Zubehörteilen des Insulators mit einem Mörtel zur Abdichtung
Process for manufacturing a glass or ceramic high-voltage electrical insulator by sealing the metallic parts of said insulator with a sealing mortar

(30) Priorité: 10.03.2009 FR 0951490
(43) Date de publication de la demande: 15.09.2010
(73) Titulaire: Sediver Société Europeenne d'Isolateurs en Verre et Composite, 92017 Nanterre Cédex (FR)
(72) Inventeur: Prat, Sandrine, 03270 Mariol (FR)
(74) Mandataire: Prugneau, Philippe

(56) Documents cités:
- FR-A1- 2 776 285
- FR-A5- 2 031 985
- US-A- 5 466 289
- US-A1- 2007 228 612

## Description

L'invention concerne un procédé de fabrication d'un isolateur haute tension comprenant une jupe en verre ou en porcelaine, un capot métallique et une tige métallique, dans lequel le capot et la tige sont respectivement scellés sur ladite jupe de l'isolateur par un mortier de scellement, le mortier de scellement étant obtenu en mélangeant à sec un ciment alumineux et du sable, puis en malaxant le mélange obtenu avec de l'eau.

En particulier, l'invention concerne des isolateurs de suspension et d'ancrage, plus particulièrement des isolateurs dits à capot et à tige, comprenant une jupe isolante en un matériau diélectrique tel que le verre trempé ou la porcelaine ayant une partie supérieure fixée dans un capot métallique par un liant ou mortier de scellement à base de ciment alumineux et dans laquelle est fixée une tige métallique par ce même mortier de scellement.

Une fois assemblés, de tels isolateurs de suspension sont destinés à être reliés les uns aux autres en fixant la tige d'un isolateur au capot d'un isolateur adjacent pour constituer une chaîne d'isolateurs utilisée comme support pour les lignes électriques à haute et moyenne tension. Ces isolateurs peuvent être soumis à des conditions climatiques et mécaniques très sévères et nécessitent un bon scellement entre la jupe et la tige d'une part et entre la jupe et le capot d'autre part.

On connaît par exemple du document de brevet FR 2031985 un isolateur électrique comprenant un capot et une tige métalliques, ainsi qu'une cloche et une coupelle en verre ou en porcelaine. D'une part, la tige est scellée dans la cloche par un mortier de ciment et d'autre part, le capot est inséré sur la coupelle. Il est donc nécessaire de relier en outre la cloche et la coupelle par un mortier de ciment pour obtenir l'isolateur.

Pour fabriquer un mortier de scellement, on mélange classiquement du sable à du ciment alumineux. On malaxe ensuite le mélange obtenu avec de l'eau pour obtenir le mortier de scellement qui est déposé de part et d'autre de la jupe pour sceller celle-ci d'un côté dans le capot et de l'autre côté sur la tige.

On connaît des procédés de fabrication de mortier dans lequel on mélange à sec un ciment, du sable et de la fumée de silice, puis on malaxe le mélange obtenu avec de l'eau à laquelle on ajoute un adjuvant. Par exemple, dans le document de brevet US 2007/0228612 on ajoute à l'eau un agent de réduction de la teneur en eau de type polycarboxylate, et dans le document de brevet US 5466289, on ajoute un dispersant de type copolymère vinyle. Cependant, les mortiers obtenus sont à base de ciment Portland et ne présentent pas de qualité suffisante pour sceller un isolateur électrique.

Le but de l'invention est de proposer un procédé de fabrication d'un isolateur haute tension tel que décrit ci-dessus, dans lequel on utilise un mortier de scellement à porosité très limitée offrant une très bonne résistance mécanique.

A cet effet, l'invention a pour objet un procédé de fabrication d'un isolateur haute tension comprenant une jupe en verre ou en porcelaine, un capot métallique et une tige métallique, dans lequel le capot et la tige sont respectivement scellés sur ladite jupe de l'isolateur par un mortier de scellement, le mortier de scellement étant obtenu en mélangeant à sec un ciment alumineux et du sable, puis en malaxant le mélange obtenu avec de l'eau, caractérisé en ce qu'on mélange à sec en outre de la fumée de silice avec le ciment et le sable, et en ce qu'avant le malaxage, on ajoute à ladite eau une solution aqueuse contenant un dispersant hydrosoluble contenant des fonctions carboxyliques et des chaînes polyéthers.

Ladite fumée de silice permet d'augmenter avantageusement la compacité du mortier, et ladite solution aqueuse contenant un dispersant hydrosoluble contenant des fonctions carboxyliques et des chaînes polyéthers, aussi appelée "solution aqueuse glucosée", permet d'améliorer le pouvoir mouillant de l'eau de sorte qu'on peut réduire la quantité d'eau ajoutée au mortier et diminuer ainsi la porosité du mortier. Ainsi, la meilleure compacité ajoutée à la plus faible porosité du mortier obtenu par le procédé selon l'invention produisent de manière complémentaire une augmentation de la résistance mécanique du mortier.

On a réalisé de nombreux tests de fabrication d'un mortier de scellement qui ont abouti à un mortier de scellement ayant une très bonne résistance mécanique, une très bonne compacité et une très faible porosité par rapport à des mortiers de scellement d'autre composition. On a en particulier réalisé des tests avec une composition similaire mais sans fumée de silice ou sans solution aqueuse, qui n'ont pas donné de résultats satisfaisants.

Le procédé de fabrication d'un isolateur haute tension selon l'invention peut présenter les particularités suivantes :
- la masse de ciment alumineux représente environ de 50 % à 80 % par rapport à la masse totale du mélange de sable et de ciment, la masse de sable représente environ de 20 % à 50% par rapport à la masse totale du mélange de sable et de ciment, la masse de fumée de silice représente environ de 2 % à 10 % par rapport à la masse dudit ciment seul dans le mortier, la masse d'eau représente environ de 17 % à 27 % par rapport à la masse dudit ciment seul dans le mortier, et la masse de solution aqueuse représente environ de 0,2% à 0,5% par rapport à la masse dudit ciment seul dans le mortier;
- par rapport à la masse dudit ciment seul dans le mortier, la masse de fumée de silice représente de préférence environ 6 %, la masse d'eau représente de préférence environ 22 %, et la masse de solution aqueuse représente de préférence environ 0,25% ;
- ledit ciment contient un taux d'alumine compris entre 30 % et 75 % ;
- ledit sable a une granulométrie centrée entre environ 200 micromètres et 300 micromètres.

L'invention s'étend à un isolateur haute tension comprenant une jupe en verre ou en porcelaine, un capot métallique et une tige métallique, dans lequel le capot et la tige sont respectivement scellés sur ladite jupe de l'isolateur par un mortier de scellement fabriqué selon le procédé ci-dessus.

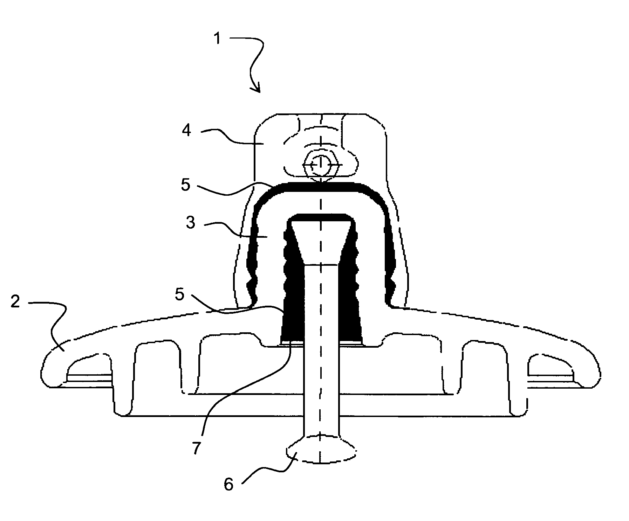

L'invention sera maintenant décrite plus en détail et en référence au dessin annexé qui en illustre un exemple non limitatif.

La figure unique montre schématiquement un isolateur haute tension.

Sur la figure unique, on a représenté un isolateur haute tension 1 comprenant une jupe 2 en verre ou en porcelaine, un capot métallique 4 raccordé à une partie supérieure 3 de la jupe 2 par du mortier 5 et une tige métallique 6 raccordée dans une cavité 7 de la jupe 2 à l'intérieur de ladite partie supérieure 3 de la jupe 2 par le mortier 5 identique à celui dans le capot 4.

Pour préparer le mortier 5 selon l'invention, on mélange d'abord à sec du ciment alumineux, du sable et de la fumée de silice micrométrique dans un malaxeur normalisé (par exemple, selon la norme NF EN 196-1) pendant une durée comprise entre 1 minute et 10 minutes. Dans ce mélange sec, le ciment représente entre environ 50% et 80% de la masse totale du mélange de sable et de ciment, le sable représente entre environ 20% et 50% de la masse totale du mélange de sable et de ciment et la masse de fumée de silice ou micro-silice représente de 2 à 10% environ de la masse de ciment seul et de préférence environ 6%. De préférence, le ciment est choisi parmi des ciments alumineux aussi appelés ciment fondu, contenant un taux d'alumine compris entre environ 30 % et 75%. Le sable est de préférence du sable fin de granulométrie contrôlée et centrée sur une valeur comprise entre environ 200 et 300 micromètres. La fumée de silice, étant d'une taille bien plus petite que les particules de ciment et les grains de sable, permet de colmater des interstices subsistant entre les particules de ciment et les grains de sable, d'une manière similaire au ciment qui colmate, de manière connue, des interstices entre grains de sable, ce qui permet d'augmenter beaucoup la compacité du mortier.

Puis, on ajoute au mélange sec de l'eau contenant une solution aqueuse glucosée et le malaxage reprend pendant une durée comprise entre 1 minute et 15 minutes. De préférence, la solution aqueuse glucosée est une solution aqueuse contenant un dispersant hydrosoluble contenant des fonctions carboxyliques et des chaines polyéthers à environ 30 % d'extrait sec. Une telle solution est par exemple décrite dans le document de brevet FR 2 776 285. Dans le procédé selon l'invention, la solution aqueuse glucosée joue un rôle de plastifiant et permet d'améliorer le pouvoir mouillant de l'eau. De cette façon, on peut réduire la quantité d'eau ajoutée au mortier et diminuer ainsi la porosité du mortier, ce qui augmente la résistance mécanique de celui-ci.

De préférence, le rapport de la masse d'eau sur la masse de ciment est compris entre environ 17% et 27% et de préférence environ 22%. La solution aqueuse glucosée est ajoutée à l'eau dans une proportion comprise entre environ 0,2% et 0,5% de la masse de ciment seul, et de préférence environ 0,25%.

On obtient en sortie du malaxeur une pâte de mortier humide qui est dosée avant d'être introduite dans la jupe 2 de l'isolateur 1. On comprendra que la quantité de mortier est dosée avec précision selon la taille de l'isolateur.

Pour assembler un isolateur 1 selon l'invention, on réalise du mortier comme décrit ci-dessus, et on introduit d'abord une dose de mortier 5 dans la cavité 7 de la partie supérieure 3 de la jupe 2. On insère alors la tige 6 dans le mortier 5 en appliquant des vibrations à l'ensemble, de sorte que la tige 6 s'enfonce dans le mortier jusqu'à arriver en butée contre le fond de la cavité 7. On dépose ensuite une autre dose de mortier 5 dans le capot 4 et on insère la partie supérieure 3 de la jupe 2 dans le capot 4 en appliquant aussi des vibrations pour faciliter la mise en place de la jupe 2 dans le capot 4. On comprendra que l'on peut aussi mettre d'abord le capot 4 sur la jupe 2, puis la tige 6 dans la jupe 2. Les opérations d'assemblage de la tige 6 et du capot 4 métalliques sur la jupe 2 peuvent aussi être simultanées.

Enfin, la prise du mortier est réalisée par immersion de l'ensemble formé par la jupe 2, le capot 4 et la tige 6 dans un bain d'eau, de préférence d'eau chaude à une température comprise entre environ 50°C et 70°C pendant une durée comprise entre environ 60 et 120 minutes. On pourrait aussi immerger le mortier dans un bain d'eau à température ambiante pendant une durée comprise entre 8 et 24 heures. Le mortier est ainsi durci, puis il est laissé refroidir à l'air libre à température ambiante.

Exemple :

Des tests de résistance mécanique ont été effectués sur des mortiers à base de ciment alumineux réalisés selon le protocole suivant :
- malaxage à sec du ciment et du sable, et éventuellement de silice, pendant une minute,
- ajout de l'eau de gâchage, et éventuellement de la solution glucosée, puis malaxage pendant 4 minutes.

Les tests de résistance mécanique ont été effectués après que les mortiers ont été traités pour durcir dans de l'eau à 55°C pendant 1 h30, puis refroidis à l'air à 20°C pendant 1 h. Les résistances mécaniques ont été mesurées sur des prismes de dimension 4 x 4 x 16 centimètres fabriqués sur une table à choc normalisé NF EN 196-1.

Le tableau 1 donne les résultats de tests de résistance mécanique en flexion et en compression pour un mortier réalisé par le procédé selon l'invention, pour un mortier classique sans adjuvant et pour d'autres mortiers de test. Comme cela ressort du tableau 1, la composition pour mortier de scellement selon l'invention (ligne 2 du tableau 1) apporte une bien meilleure résistance mécanique que ce soit en flexion ou en compression que la composition témoin sans adjuvants (ligne 1) et que les compositions avec fumée de silice seule (ligne 3) ou solution aqueuse glucosée seule (ligne 4).

**Tableau 1**

| | Composition | Résistance mécanique en flexion | Résistance mécanique en compression |
|---|---|---|---|
| 1 | Ciment: 1500g | à 2h30 : | à 2h30 : |
| | Sable : 500g | 5,8 MPa | 54,0 MPa |
| | Eau : 350g | | |
| 2 | Ciment: 1500g | à 2h30 : | à 2h30 : |
| | Sable : 500g | 9,8 MPa | 67,3 MPa |
| | Fumée de silice : 6% | | |
| | Eau : 325g | à 28 jours : | à 28 jours : |
| | Solution glucosée : 0,25% | 16,4 MPa | 90,7 MPa |
| 3 | Ciment: 1500g | à 2h30 : | à 2h30 : |
| | Sable : 500g | 9,5 MPa | 51,7 MPa |
| | Fumée de silice : 6% | | |
| | Eau : 360g | | |
| 4 | Ciment: 1500g | à 2h30 : | à 2h30 : |
| | Sable: 500g | 6,1MPa | 57,0 MPa |
| | Eau : 325g | | |
| | Solution glucosée : 0,2% | | |

## Revendications

1. Procédé de fabrication d'un isolateur haute tension (1) comprenant une jupe (2) en verre ou en porcelaine, un capot métallique (4) et une tige métallique (6), dans lequel le capot (4) et la tige (6) sont respectivement scellés sur ladite jupe (2) de l'isolateur (1) par un mortier de scellement, le mortier de scellement étant obtenu en mélangeant à sec un ciment alumineux et du sable, puis en malaxant le mélange obtenu avec de l'eau, **caractérisé en ce qu'**on mélange à sec en outre de la fumée de silice avec le ciment et le sable, et **en ce qu'**avant le malaxage, on ajoute à ladite eau une solution aqueuse contenant un dispersant hydrosoluble contenant des fonctions carboxyliques et des chaînes polyéthers.

2. Procédé de fabrication d'un isolateur haute tension (1) selon la revendication 1, dans lequel la masse de ciment alumineux représente environ de 50 % à 80 % par rapport à la masse totale du mélange de sable et de ciment, la masse de sable représente environ de 20 % à 50% par rapport à la masse totale du mélange de sable et de ciment, la masse de fumée de silice représente environ de 2 % à 10 % par rapport à la masse dudit ciment seul dans le mortier, la masse d'eau représente environ de 17 % à 27 % par rapport à la masse dudit ciment seul dans le mortier, et la masse de ladite solution aqueuse représente environ de 0,2% à 0,5% par rapport à la masse dudit ciment seul dans le mortier.

3. Procédé de fabrication d'un isolateur haute tension (1) selon la revendication 1 ou 2, dans lequel, par rapport à la masse dudit ciment seul dans le mortier, la masse de fumée de silice représente de préférence environ 6 %, la masse d'eau représente de préférence environ 22 %, et la masse de ladite solution aqueuse représente de préférence environ 0,25%.

4. Procédé de fabrication d'un isolateur haute tension (1) selon l'une des revendications précédentes, dans lequel ledit ciment contient un taux d'alumine compris entre 30 % et 75 %.

5. Procédé de fabrication d'un isolateur haute tension (1) selon l'une des revendications précédentes, dans lequel ledit sable a une granulométrie centrée entre environ 200 micromètres et 300 micromètres.

## Claims

1. A method of fabricating a high-voltage insulator (1) comprising a glass or porcelain skirt (2), a metal cap (4), and a metal pin (6), in which method the cap (4) and the pin (6) are respectively sealed to said skirt (2) of the insulator (1) by means of a sealing mortar, the sealing mortar being obtained by dry-mixing aluminous cement with sand, and then by mixing the resulting mix with water, said method being **characterized in that** silica fume is also dry-mixed with the cement and sand, and **in that**, prior to mixing the mix with water, an aqueous solution containing a hydrosoluble dispersant containing carboxylic functions and polyether chains is added to said water.

2. A method of fabricating a high-voltage insulator (1) according to claim 1, in which method the mass of aluminous cement represents approximately in the range 50% to 80% relative to the total mass of the sand and cement mix, the mass of sand represents approximately in the range 20% to 50% relative to the total mass of the sand and cement mix, the mass of silica fume represents approximately in the range 2% to 10% relative to the mass of said cement alone in the mortar, the mass of water represents approximately in the range 17% to 27% relative to the mass of said cement alone in the mortar, and the mass of said aqueous solution represents approximately in the range 0.2% to 0.5% relative to the mass of said cement alone in the mortar.

3. A method of fabricating a high-voltage insulator (1) according to claim 1 or claim 2, in which, relative to the mass of said cement alone in the mortar, the mass of silica fume preferably represents about 6%, the mass of water preferably represents about 22%, and the mass of said aqueous solution preferably represents about 0.25%.

4. A method of fabricating a high-voltage insulator (1) according to any preceding claim, in which said cement contains an alumina content lying in the range 30% to 75%.

5. A method of fabricating a high-voltage insulator (1) according to any preceding claim, in which said sand has a grain size centered on a value lying approximately in the range 200 µm to 300 µm.

## Patentansprüche

1. Verfahren zur Herstellung eines Hochspannungsisolators (1), umfassend einen Schirm (2) aus Glas oder aus Porzellan, eine metallische Haube (4), und einen Metallstift (6), wobei die Haube (4) und der Stift (6) jeweils an dem Schirm (2) des Isolators (1) durch einen Festlegemörtel festgelegt sind, wobei der Festlegemörtel erhalten wird durch das trockene Vermischen eines aluminiumhaltigen Zements und Sand und durch anschließendes Vermengens des Gemischs mit Wasser, **dadurch gekennzeichnet, dass** man ferner Silicastaub mit dem Zement und dem Sand trocken vermischt, und dass vor dem Vermengen dem Wasser eine wässrige Lösung mit einem wasserlöslichen Dispergiermittel, das Carboxyl-Funktionen und Polyether-Ketten enthält, zugesetzt wird.

2. Verfahren zur Herstellung eines Hochspannungsisolators (1) nach Anspruch 1, wobei die aluminiumhaltige Zementmasse ungefähr 50% bis 80% in Bezug auf die Gesamtmasse der Mischung von Sand und Zement ausmacht, wobei die Sandmasse ungefähr 20% bis 50% in Bezug auf die Gesamtmasse der Mischung von Sand und Zement ausmacht, wobei die Masse des Silicastaubes ungefähr 2% bis 10% in Bezug auf die Masse des Zements alleine in dem Mörtel ausmacht, wobei die Masse des Wassers ungefähr 17% bis 27% in Bezug auf die Masse des Zements alleine in dem Mörtel ausmacht, und wobei die Masse der wässrigen Lösung ungefähr 0,2% bis 0,5% in Bezug auf die Masse des Zements alleine in dem Mörtel ausmacht.

3. Verfahren zur Herstellung eines Hochspannungsisolators (1) nach Anspruch 1 oder 2, wobei - bezogen auf die Masse des Zements alleine in dem Mörtel - die Masse an Silicastaub vorzugsweise ungefähr 6%, die Masse an Wasser vorzugsweise ungefähr 22% und die Masse an wässriger Lösung vorzugsweise ungefähr 0,25% ausmacht.

4. Verfahren zur Herstellung eines Hochspannungsisolators (1) nach einem der vorhergehenden Ansprüche, wobei der Zement einen Anteil Aluminiumoxid zwischen 30% und 75% enthält.

5. Verfahren zur Herstellung eines Hochspannungsisolators (1) nach einem der vorhergehenden Ansprüche, bei dem der Sand ein mittleres Korngrößenmaß zwischen 200 Mikrometern und 300 Mikrometern aufweist.
